# EUROPEAN PATENT SPECIFICATION

(11) **EP 2 574 823 B1**
(45) Date of publication and mention of the grant of the patent: **07.12.2016**
(21) Application number: 12186549.7
(22) Date of filing: 28.09.2012
(51) Int. Cl.: F16G 13/20, E05F 11/42, E05F 15/611, F16G 13/04

(54) **Articulated chain**
Gelenkkette
Chaine articulée

(30) Priority: 30.09.2011 IT TV20110133
(43) Date of publication of application: 03.04.2013
(73) Proprietor: Nekos Srl, 36064 Mason Vicentino (VI) (IT)
(72) Inventor: Galliazzo, Giuliano, 36042 Breganze (Vicenza) (IT)
(74) Representative: Dragotti, Gianfranco

(56) References cited:
- EP-A1- 2 258 653
- EP-A2- 1 239 184
- WO-A1-2005/108821
- DE-U1- 20 304 437
- GB-A- 593 880
- JP-U- 47 019 655

## Description

The present invention relates to a chain with hinged links suitable for acting as a pushing/pulling member in chain actuators, in particular for moving windows, ceiling domes and various fixtures.

The invention also relates to a chain actuator comprising such a chain.

As is known in various application sectors and in particular in the sector of fixtures for moving doors, windows and leaves which cannot be easily accessed or are difficult to operate, chain actuators are used where the associated pushing/pulling member consists of a chain with links. These chains are generally actuated by means of a chain pinion.

The actuating chains are able to be folded up inside the actuator housing when they are retracted. In the case of pushing actuators, it is known that, in order for this type of actuator to operate correctly, the pushing/pulling chains must be preferably designed so as to be able to flex in a single direction. At the same time, if they are kept aligned when they are completely or partially outside of the housing, they are able to transmit the pushing/pulling force necessary for moving the fixture to which they are connected. The chains for these chain-type actuators must satisfy very different requirements compared, for example, to the drive chains which operate simply by means of traction, for example between two gear wheels.

Various types of chains for actuators, such as chains with bent links, chains with flat links and chains with U-shaped links, are known.

These types of chains, although widely used, are not without drawbacks.

A chain with bent links may be composed of a single row of links or a double row of links.

The single row chain comprises a plurality of inner and outer links which are connected together by means of driving pins. The inner and outer links have a bent end (with an inclination of about 20° - 25°, depending on the thickness of the link) and are assembled, upside down with respect to each other, so that the adjacent links may rest on the bent part, thus ensuring that the chain has the necessary rigidity.

In the case of a chain with a double row of links, a double row of inner links is held together by means of bushes. These bushes, which are mounted with interference inside special holes provided in the inner links, have the function of keeping the two rows of inner links parallel.

The outer links, which have the function of keeping the chain straight and aligned when acted on by a tensile or compressive force, are connected to the inner links by means of connecting pins.

These pins are inserted inside the connecting bushes of the inner links and are clinched onto the outer links.

The pitch of such a type of chain is therefore defined by the coupled arrangement of the following parts: four links (two inner links, provided with receiving holes for the bushes, and two outer links, provided with receiving holes for the connecting pins to be clinched), two bushes and two pins.

Chains with flat links have various defects. Firstly, the mechanical guiding parts of the chain are in contact with a large number of sharp edges (the bent ends of the links) with the risk that the chain may get jammed inside the guide and consequently not have a uniform motion.

Moreover, owing to the small cross-sectional contact area between two adjacent links acting against each other, it is required to use links having a greater thickness than other known solutions.

Finally, chains with bent links have a lower rigidity compared to other types of chain and this defect is more evident in the latest generation actuators where, by means of an adaptor pivot, the chain may be adapted to the arc travelled along by the leaf during opening.

A flat-link chain may also be formed by a single row of links or a double row. The single row solution, however, is not used very much since it does not allow chains with a high rigidity to be obtained.

The links of this type of chain are flat and are formed by means of shearing. Once assembled, each links rests on the end back part of the adjacent links. The links, by acting against each other, ensure the rigidity of the chain provided that the ends of the links are aligned with each other.

In the case of flat-link chains formed by a double row of links, the inner links, in a similar manner to that which occurs with bent-link chains, are kept parallel to each other by means of bushes. The bushes are mounted with interference inside suitable holes provided in the inner links.

The outer links are connected to the inner links by means of connecting pins which are inserted inside the connecting bushes and clinched onto the outer links. By means of the outer links the chain is kept straight and aligned when acted on by a tensile or compressive force.

In a similar manner to a bent-link chain, the pitch of a flat-link chain is defined by the coupled arrangement of the following elements: four links (two inner links, provided with receiving holes for the bushes, and two outer links, provided with receiving holes for the connecting pins to be clinched), two bushes and two pins.

Flat-link chains have the defects described below. On the one hand, the particular form of the various links does not allow manual assembly of the various links.

Assembly must be performed with extreme precision in order to prevent the chain from seizing or not remaining correctly aligned when acted on by a compressive or tensile force.

For this reason, during assembly of the various links, it is required to use automatic assembly devices with a consequent increase in the costs.

Moreover, flat-link chains have a limited lateral flexibility. In order to remedy this drawback, the actuator must be provided with an adaptor pivot for rotation of the chain.

Chains with U-shaped links are also used as a pushing and pulling member in linear actuators.

Chains with U-shaped links may be of two types: with the inner and outer links which are U-shaped or with a link U-shaped in such a way that a first end performs the function of the inner link and a second end performs the function of the outer link.

The opposing force exerted between adjacent links, both in the first configuration and in the second configuration, occurs in the link portion which forms the base of the U.

The links are assembled together solely by means of pins which driven into and clinched onto the outer links.

This type of chain is not widely used because it requires extremely precise shearing and bending of the single links. Moreover, once assembled, the chain must maintain over time the exact original form in order to avoid jamming or friction between the links. In this connection it should be noted that any heat fluctuations, due to external factors or internal friction, could result in a dimensional variation of the single chain elements, resulting in an incorrect functioning thereof.

Moreover, another drawback of these chains consists in the fact, owing to the friction between the single links, they are very rigid and require a high tensile and compressive force in order to be operated.

It should also be noted that the various connecting pins slide solely inside the holes provided in the links, the use of bushes not being envisaged, and therefore they are subject to a high degree of wear. This reduces, with time, the precision of the chain and results in the need for frequent maintenance.

Finally, the chains of this type, owing to their structure, may flex laterally and therefore are not very suitable for being used to move high loads.

Chains with a single U-shaped link and made of polymer material are also known. These chains are suitable for moving very small loads and, as mentioned, are composed of single links having one end which performs the function of an inner link and a second end which acts as an outer link.

The links are connected by means of through-pins sliding in the inner part and fixed (driven) into the outer part.

The same comments made above are applicable to this type of chain.

Finally, the known chains used as pushing/pulling members in actuators for operating windows and/or fixtures have overall dimensions which may not be reduced beyond certain limits so as not adversely affect the strength characteristics and not complicate unduly assembly of the various components.

This limitation means that the actuators, inside which the chain is housed following retraction, have relatively large overall dimensions. This, for example, does not allow or makes it very difficult to incorporate the actuators inside the frame of the fixtures.

Chains have also been proposed where the movement is transmitted to them by means of teeth which project laterally from the chain and which engage with complementary driving members. These chains are suitable, however, for transmitting relatively low forces and therefore are unsuitable for use in modern chain actuators. Moreover, this configuration is suitable for forming chains which are curved on the opposite side to the driving member and therefore may not be used in any case in modern chain actuators, where the chain must be wound around the driving member in order to meet the dimensional requirements of these devices. For example, it is known from GB 593,880 to use a hinged chain suitable for acting as a driving member for the windows of motor vehicles or other similar windows. This chain comprises a plurality of outer links, arranged in pairs, suitable for connecting together inner links having engaging teeth projecting laterally from the outer surface of the chain. These engaging teeth are suitable for engagement with a worm gear connected to the crank mechanism of the window. For the abovementioned reasons it is evident that this chain may not be used in a modern chain actuator.

For example, the chain described in GB 593,880 must be necessarily mounted so as to slide inside a guide having a longitudinal slit suitable for allowing the projecting teeth of the chain to engage with the worm gear on the opposite side to the direction of curvature of the chain.

Another drawback of this type of chain consists in the fact that, during the movement of the chain, it is possible that the projecting engaging teeth may get caught up with external bodies, with the risk that the chain may be stopped and/or be damaged. The chain must therefore be fully protected and may not slide outside the actuator, as is instead necessary in a modern chain actuator.

As mentioned above, in chains of this type, moreover, the relative arrangement of the engaging teeth inside the sliding guide limits the dimensions of the engaging teeth with the consequence that this type of chain may be used solely in the case where mechanical moments of a limited magnitude must be transmitted between worm and chain.

WO 2005/108821 also discloses an hinged chain suitable for acting as a pushing/pulling member in a chain actuator, said chain comprising: a series of chain elements, each chain element being made as one piece and being suitable for being hinged with a preceding chain element and a following chain element by means of respective pairs of external plates arranged alongside the longitudinal side surfaces of the chain element, said external plates and said chain elements being hinged together by coupling means comprising hinging pins, each chain element having end surfaces designed to face end surfaces of a preceding chain element and a following chain element so as to allow the hinged chain to be freely foldable in a single direction and has at least one side surface which extends transversely between the respective pairs of external plates and which is shaped so as to define a series of engaging zones for driving the hinged chain, the engaging zone of each chain element being delimited in the direction of extension of the hinged chain by at least two reliefs which are passed through by the hinging pins for hinging with respective pairs of external plates and the engaging zones being situated between the hinging pins. WO 2005/108821 does not disclose a central chain element made of one piece and in contact with the external plates.

The object of the present invention is therefore to overcome at least partly the drawbacks mentioned above with reference to the prior art.

In particular a task of the present invention is to provide a hinged chain for acting as a pushing/pulling member in chain actuators, which is composed of parts which may be easily assembled together.

Moreover, a task of the present invention is to provide a hinged chain for acting as a pushing/pulling member in chain actuators, which has optimum performance features and a limited manufacturing cost.

Furthermore, a task of the present invention is to provide a hinged chain for acting as a pushing/pulling member in chain actuators, which is subject to less wear than the known devices.

A task of the present invention is also to provide a hinged chain for acting as a pushing/pulling member in chain actuators, which has small dimensions, without this resulting in a reduction in the mechanical strength thereof or resulting in difficult assembly of the various components.

A further task of the present invention is to provide a hinged chain for acting as a pushing/pulling member in chain actuators, in which the constructional components may be produced and assembled in a smaller amount of time and with lower production costs.

Furthermore, a task of the present invention is to provide a hinged chain for acting as a pushing/pulling member in chain actuators, which is able to be centred on a driving pinion.

A task of the present invention is to provide a hinged chain for acting as a pushing/pulling member in chain actuators, which has a structure without projections and/or reliefs and which therefore cannot get easily caught up with external bodies located in the vicinity of the operating path of the chain.

Finally, a task of the present invention is to provide a chain actuator which is strong and reliable, in particular for moving fixtures or windows, and has small dimensions.

This object and these tasks are achieved by means of a hinged chain according to Claim 1 and an actuator according to Claim 9.

In order to understand more fully the invention and appreciate its advantages, a number of exemplary and non-limiting embodiments are described below with reference to the accompanying drawings in which:
- Figure 1 shows an exploded view, from the rear, of an element of a hinged chain according to the invention;
- Figure 2 shows an exploded view, from the front, of an element of a hinged chain according to the invention;

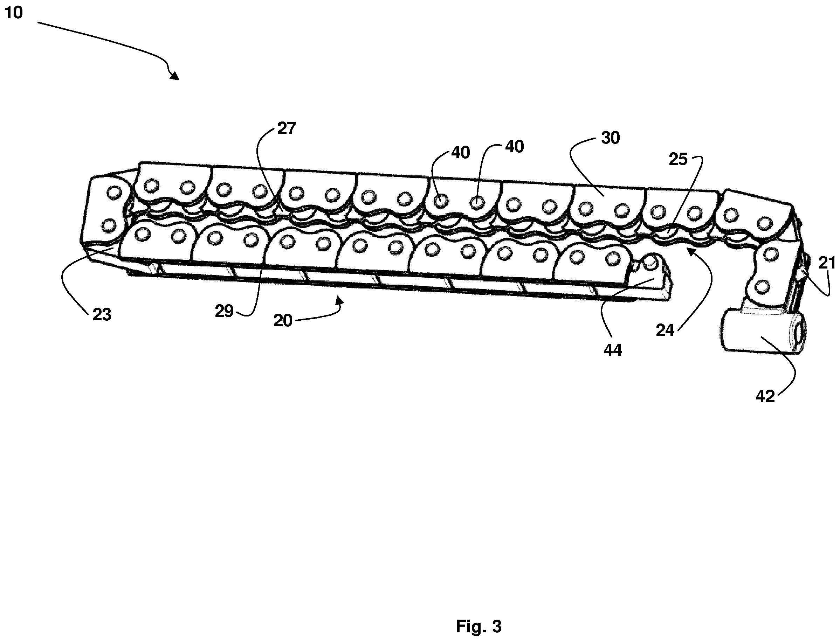

- Figure 3 shows a perspective view, in a partly retracted configuration, of a first embodiment of the hinged chain according to the invention;
- Figure 4 shows a front view of an element of the hinged chain according to the invention;
- Figure 5 shows a top plan view of the element of the hinged chain according to Figure 4;
- Figure 6 shows a side view of the element of the hinged chain according to Figure 4;
- Figure 7 shows a schematic view of the element of the hinged chain according to Figure 4 during meshing with a chain actuating means;
- Figure 8 shows schematically a chain actuator according to the invention.

With reference to the accompanying figures, 10 denotes a hinged chain in its entirety. Said hinged chain 10 is suitable for acting as a pushing/pulling member in a chain actuator and comprises a series of chain elements 20.

For each chain element 20 it is possible to define in an univocal manner a longitudinal axis "t"; said longitudinal axis "t" being situated along the direction of maximum extension of the element 20.

In the case where the hinged chain 10 is positioned along a straight line, the longitudinal axis "t" of the single chain elements 20 coincides with the longitudinal axis of the hinged chain 10.

With reference to the longitudinal axis "t", each chain element 20 is defined by two end surfaces 21 and by four side surfaces 22, 23, 24, 29. In detail, end surfaces 21 indicate the surfaces of the element 20 arranged transverse to the longitudinal axis. In particular these surfaces may extend, at least partially, along a plane perpendicular to the longitudinal axis "t".

Similarly, side surfaces 22, 23, 24, 29 indicate the four surfaces which connect the end surfaces 21 together.

Each element 20 is made solid as a single piece and is suitable for being hinged with a preceding element or a following element by means of respective pairs of external plates 30. The external plates 30 and the chain elements 20 are hinged together by coupling means 40. Said coupling means 40 comprise hinging pins 40.

As shown in the accompanying figures, the chain elements 20 are hinged in succession by means of the external plates 30 and the coupling means 40 so that corresponding end surfaces 21 of following chain elements 20 are situated facing each other.

The external plates 30, in fact, used to hinge together the chain elements 20 are positioned close to or in contact with opposite side surfaces 22, 23 of each chain element 20.

In the continuation of the description, longitudinal side surfaces 22, 23 will indicate the side surfaces of the chain element 20 which are arranged alongside the external plates 30.

In a similar manner, transverse side surfaces 24, 29 will indicate the side surfaces of the chain element 20 which are positioned transversely with respect to the external plates 30.

Each chain element 20 has end surfaces 21 designed to be arranged facing end surfaces of a preceding chain element and a following chain element so as to allow the hinged chain 10 to be freely foldable in a single direction.

Moreover, each chain element 20 has at least one of its transverse side surfaces 24, i.e. one of the two side surfaces which extend transversely between the respective pairs of plates 30, which is shaped so as to define an engaging zone 25, 26 for driving the hinged chain 10. The chain elements assembled together thus define a series of engaging zones.

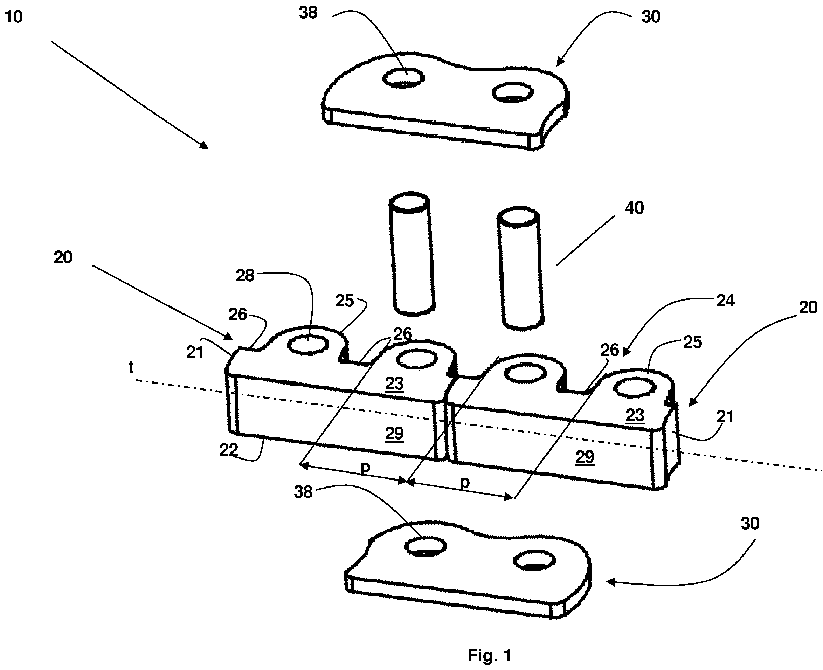

In detail, as shown in Figures 1-2 and 4-7, in a longitudinal direction with respect to the chain, the transverse side surface 24 of the chain element 20 advantageously has a profile matching the profile of a tooth of a known straight-tooth gear wheel.

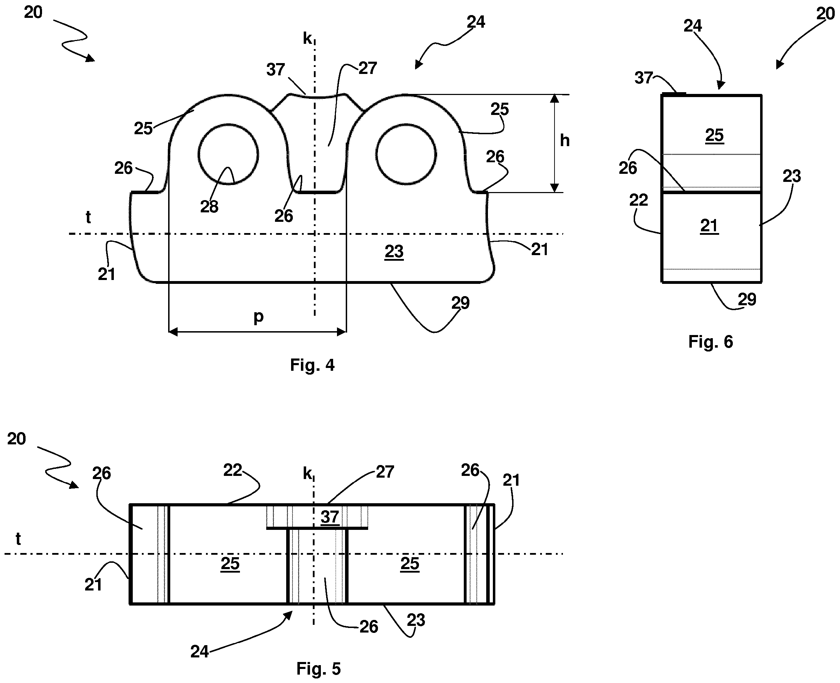

With specific reference to Figures 4-7, it can be noted how the engaging zone defined by the transverse side surface 24 of the chain element 20 is delimited by at least two reliefs 25. Said reliefs have a curvilinear shape and are arranged symmetrically with respect to a plane "k" which is arranged transversely (namely perpendicularly with respect to the axis "t") and which may be regarded as forming with reasonable accuracy the centre line of the chain element 20. Successive chain elements define, by means of their facing reliefs, also an engaging half-part substantially corresponding to the engaging part between the two reliefs of each element. In this way there is a substantially continuous sequence of engaging zones for driving the chain.

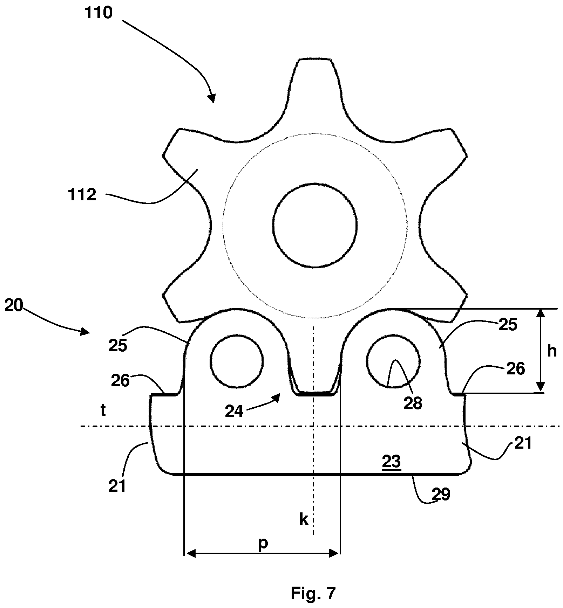

The sides of the reliefs 25 form an internal-tooth gearing and are advantageously suitable for engaging with the teeth 112 of a gear wheel 110, which may be designed to operate the chain itself (see schematic diagram in Figure 7).

Preferably, the engaging zone 25, 26 of each chain element 20 comprises at least two reliefs 25 which are advantageously connected together by means of at least one reinforcing rib 27 which is close to one of the longitudinal side surfaces 22, 23 of the chain element 20 (see Figures 4-6).

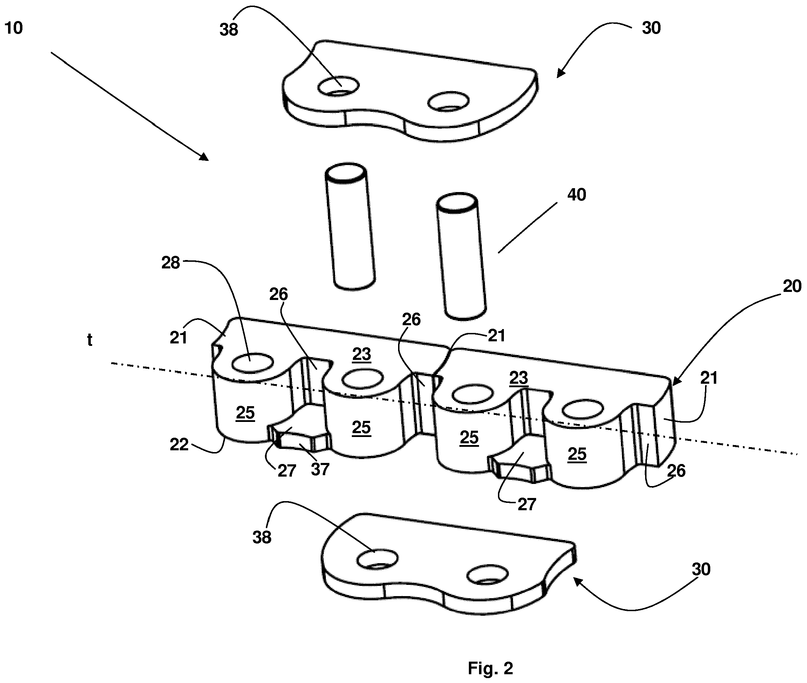

This rib 27 does not interfere with the engaging zone provided in the transverse side surface 24 of the element 20, but allows the mechanical strength of the element 20 to be increased. As can be clearly seen in Figures 2 and 4, the free edge 37 of this rib 27 is suitably shaped and may project beyond the two reliefs 25 without interfering, however, with the chain driving member or with external bodies situated in the vicinity of the operating path of the chain.

In fact, as can be clearly understood from the figures, the maximum height of the free edge 37 of the rib 27 is advantageously the same as or less than the maximum height of the external plates 30, both calculated with respect to the transverse side surface 29 opposite to the transverse side surface 24 of the chain element 20.

The provision of the lateral rib 27 allows better lateral guiding and centring of the chain on the driving pinion to be obtained.

In the case where the hinged chain 10 must operate high loads, advantageously a second reinforcing rib (not shown in the accompanying figures) may be provided between the two reliefs 25 of the chain element 20, so as to improve the strength of the chain and guiding and centring thereof on the driving pinion.

With reference to the accompanying figures, 26 denotes the portion of the transverse surface 24 which delimits the two reliefs 25 at the bottom; this portion extends at least partially parallel to the longitudinal axis "t".

The distance between the surface 26 and the top of the two reliefs 25 is defined as the height of the relief and is denoted by "h" in Figure 7. This height of the relief, which is determined during design of the chain element 20, is such as to receive the teeth of a chain driving pinion.

As in the case of the gear wheels, pitch "p" of the chain element 20 will be defined as the distance between the two corresponding points of the two reliefs 25 measured along a direction parallel to the longitudinal axis "t".

On the basis of that indicated above, an engaging pinion for driving the chain, in order to be able to mesh correctly, must have a tooth height not greater than the height of the relief "h" and a pitch "p". The chain may also be designed with dimensions during the design stage based on a previously chosen pinion.

With reference to Figure 1 it can be noted how the connection of the chain element 20 to the external plates 30 is performed so that the pitch measured between two reliefs 25 of two subsequent chain elements 20 is equal to the pitch "p" defined above.

In this way correct meshing is ensured not only of the single chain element 20 but also of the entire hinged chain 10 with the teeth 112 of the actuating pinion 110.

Preferably the coupling means 40 by means of which the external plates 30 are hinged onto the chain elements 20 comprise pins 40. As is shown in detail in Figures 1 and 2, these pins 40 are received in corresponding through-holes 28 and 38 provided in the chain elements 20 and the external plates 30, respectively.

As can be clearly seen in the figures, preferably the holes 28 are provided in the reliefs 25. In this way the engaging zones 25, 26 of the chain elements are situated between the hinging pins 40. This optimizes the use of material for the elements and strengthens the chain since the pushing force of the chain driving member lies substantially in a plane containing the pins 40.

The ends of each pin 40, once assembly of the chain element 20 and external plates 30 has been completed, are preferably clinched onto the outer surfaces of the plates 30 so as to prevent the pin 40 from coming out of the chain element 20 and the external plates 30.

The external plates 30 are thus kept parallel to each other and substantially in close contact with minimum play against the chain elements 20.

Moreover, the simplified structure of the chain elements 20 means that the external plates 30 may be easily mounted in succession, keeping a constant distance between the corresponding facing surfaces of plate and chain element.

Preferably this distance may vary from 0.1 mm to 0.2 mm. In the preferred embodiment said distance is about 0.1 mm.

In this way good relative sliding of the parts forming the hinged chain 10 is ensured. Moreover, a perfect alignment of the chain elements 20 of the hinged chain 10 is achieved.

As already mentioned, the end surfaces 21 of the chain elements 20 are shaped with a curvature which ensures, when these surfaces 21 are facing each other, a suitable structural rigidity of the chain when acted on by a compressive force along its length. Moreover, the end surfaces 21 are shaped with a curvature which prevents the chain from being able to flex in the opposite direction to the meshing surface, but which ensures at the same time a sufficient degree of lateral flexibility of the chain in the other direction. The broad contact area makes the chain stronger and increase the pushing force which can be transmitted.

In particular, the two opposite ends 21 of each chain element are shaped one with a positive curvature and the other with a corresponding negative curvature, so that the elements hinged in sequence may rotate relative to each other about the respective pins with minimum play. The rotation beyond the rectilinear position in the opposite direction to the meshing surface 24 is advantageously prevented owing to the position of the holes 28, which is laterally offset away from the mutual contact surfaces 21 and towards the meshing surface, as can be clearly seen in the figures.

The hinged chain 10 thus formed is therefore advantageously freely foldable in a single direction.

On the basis of that shown above, it can be seen how the hinged chain 10 according to the invention may be advantageously used as a pushing/pulling member in chain actuators, of the type for example adapted to move fixtures or windows.

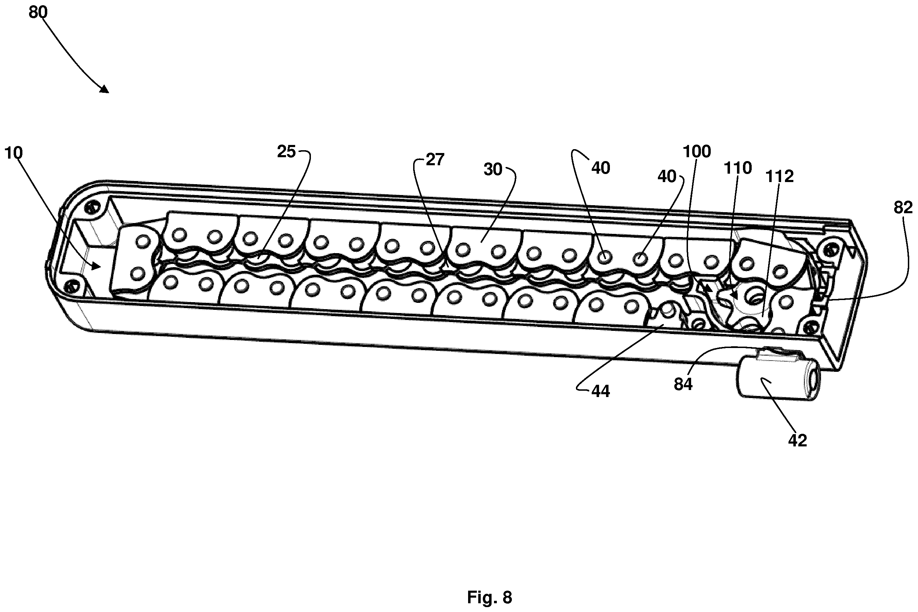

Figure 8 shows (for the sake of clarity without closing cover, which can be easily imagined by the person skilled in the art) a chain actuator denoted generally by 80. The actuator comprises a channel 82 for guided sliding of the chain 10, so as to house the chain internally when retracted and allow it to be gradually extracted through an opening 84 by operation of actuating means 100 which advantageously comprise an actuating pinion 110 about which the chain 10 is partially wound and the teeth 112 of which are suitable for engaging with the engaging zone 25, 26 provided in the chain elements 20.

Advantageously, when the teeth 112 engage with the engaging zones 25, 26, the reinforcing rib 27 provided between the reliefs 25 of the engaging zones 25, 26 may come into contact with a side surface of the teeth 112, allowing the chain to remain centred on the pinion 110. "Side surface of the teeth" 112 is understood as meaning the surface of the tooth which is not intended to engage with sides of the reliefs 25.

The actuating means 100 may comprise a known motor-driven system (not shown in the figures) for rotation of the pinion 110 or other rotating systems, as can be easily imagined by the person skilled in the art.

The chain 10 has advantageously an end inside the actuator 80 which terminates in an element 44 for sliding inside the guide channel 82 and an opposite pulling/pushing end which terminates in an element 42 for performing fixing in a known manner to the device to be operated.

At this point it is clear how the predefined objects have been achieved.

It should be noted how, owing to the particular configuration of the chain elements 20, it is possible to obtain, compared to the known devices, improved meshing between the teeth 112 of an actuating pinion 110 and the elements 20 of the chain 10.

Moreover, coupling between the engaging zone of the chain elements 20 and the teeth 112 of the pinion 110, which substantially reproduces coupling between the teeth of two gear wheels, allows a reduction in wear, vibrations and noisiness of the chain.

Furthermore, by providing a reinforcing rib 27 between the reliefs 25 of the engaging zone, it is possible to obtain a hinged chain able to be automatically centred on the actuating pinion.

Moreover, considering that this reinforcing rib has a height which is less than or at the most the same as that of the external plates 30, it does not project from the chain structure and therefore there is no risk that the chain may be caught up during its movement with external bodies present in the vicinity of its operating path.

Finally, the sides of the reliefs 25 of the chain element 20 offer, compared to the pins or the bushes used in the known chains for connecting the various links, a greater mechanical strength. For the same pushing/pulling force exerted by the hinged chain 10, compared to the known devices, it is therefore possible to reduce the dimensions of the single elements.

In this way it will be possible to provide linear actuators which have smaller-size chains and consequently smaller-size actuating pinions, limiting the overall dimensions of the actuator housing.

The various elements of the hinged chain 10 according to the invention may be made using different materials depending on the use envisaged.

In particular, the chain elements 20 may be made of steel, stainless steel, brass, light aluminium alloys, brass or zamak®, or similar materials. Alternatively, the elements 20 may be made of known high-strength plastic polymers.

The external plates 30 may also be made of steel, stainless steel, brass, or similar materials. In the same way as the chain elements 20, the plates 30 may also be made of high-strength plastic polymers.

Finally, the coupling pins 40 may be made from round bars or wires made of steel, including stainless steel, or round bars and wires made of brass or similar materials.

Machining of the external plates 30 and the coupling pins 40 is performed in a known manner.

For example, the external plates 30 may be obtained by means of shearing of sheet or strip metal.

Instead, owing to the particular structure of the chain elements 20 which, as indicated above, are made as one piece, it is possible to use different production methods more advantageous than those generally used for manufacturing the known chain elements.

It should be noted firstly that the elements of the known commercial chains, including those comprising a single inner link and a single outer link, such as U-shaped chains, are generally made by means of shaping and bending of sheet or strip metal.

The connection bushes used to fix the inner links of a bent-link chain are for example obtained from a thin plate, the opposite ends of which are folded until they reach the desired cylindrical form.

The chain elements 20 according to the present invention may be advantageously sintered metal-powder elements.

The sintering process is per se well-known. During the sintering production cycle, the first step consists in choosing the metal powders and any binders which must be used.

These powders may have different compositions and particle sizes depending on the desired characteristics of the finished product.

In a known manner, by using automatic-cycle presses, which do not require the use of specialized labour, the powder mixture is compressed inside a mould so as provide the particles which form it with the necessary cohesion and the desired shape.

Following the pressing step, the semi-finished articles obtained are placed inside special ovens in order to allow melting of any binders present in the mixture and eliminate the porosity.

The fact of being able to produce sintered chain elements 20 means that it is possible obtain parts with a very high degree of machining precision, having dimensional tolerances of even about ± 0.01 mm.

Moreover, by means of sintering it is possible to obtain chain elements 20 which have receiving holes 28 for the pins 40 which are perfectly ground and sized as well as being extremely precise.

Advantageously, the chain elements 20 may also be parts which are pressure-cast in light alloys (for example aluminium, zinc and zamak®) or cold-pressed using steel or injection-moulded using polymer materials.

Thus it is likewise possible to obtain, with a high productivity, chain elements 20 with machining tolerances in the order of a few hundredths of a millimetre.

Moreover, all the production technologies described above have the advantage that they eliminate the impact, on the dimensional tolerances of the various finished parts, of the dimensional tolerances of the starting sheets or strips.

By sintering and pressure-casting as well as cold-pressing and injection-moulding it is possible to obtain, in fact, chain elements with a tolerance which is both small and also constant over time.

The improved finishing quality possible with the chain according to the invention results in a finished product which has more uniform performance features and is more wear-resistant than the commercially available chains.

It should be noted, finally, how, owing to the particular structure of the chain elements 20, it is possible to reduce, compared to the known chains, the number of components to be assembled in order to obtain the hinged chain 10 according to the invention.

Advantageously, in fact, the assembly of the various parts of the hinged chain 10 may be performed using automatic or semi-automatic systems.

After positioning the chain elements 20 and the external plates 30 on a support surface, the coupling pins 40 may be inserted into the corresponding holes by means of a simple gripping tool. This tool, if combined with a press, also allows the pins 40 to be clinched onto the outer surfaces of the external plates 30 during the same step, thus resulting in an inseparable chain assembly.

On the basis of the above description it can be understood how the assembly of the parts making up the chain according to the invention requires a minimum amount of labour.

The single components in fact have a form and dimensions such that they are naturally predisposed for handling by robots and/or mechanical equipment.

Moreover, owing to the small number of parts to be assembled, it is possible to reduce the assembly times as well as the costs.

Finally, it should be noted how, owing to the possibility of automating the operations for assembly of the various components, it is possible to obtain a better result in terms of production quality and repetitivity.

By way of conclusion, it may be noted how the hinged chain according to the present invention is able to overcome the problems of the prior art.

In particular, it must be emphasized how the general production and labour costs for assembly of the various chain components are lower than the costs which must be incurred during the production of other chain types, both because of the small number of components to be assembled and owing to the particular form of the chain elements 20.

With regard to the embodiments of the hinged chain and actuator described above, the person skilled in the art may, in order to satisfy specific requirements, make modifications without thereby departing from the scope of the accompanying claims.

## Claims

1. Hinged chain (10) suitable for acting as a pushing/pulling member in a chain actuator, said chain comprising:
a series of chain elements (20), each chain element (20) being made as one piece and being suitable for being hinged with a preceding chain element and a following chain element by means of respective pairs of external plates (30) arranged alongside and in close contact with minimum play against longitudinal side surfaces (22, 23) of the chain element (20),
said external plates (30) and said chain elements (20) being hinged together by coupling means (40) comprising hinging pins (40),
wherein
each chain element (20) has end surfaces (21) designed to face end surfaces of a preceding chain element and a following chain element so as to allow the hinged chain (10) to be freely foldable in a single direction and has at least one side surface (24) which extends transversely between the respective pairs of external plates (30) and which is shaped so as to define a series of engaging zones (25, 26) for driving the hinged chain (10),
the engaging zone (25, 26) of each chain element (20) being delimited in the direction of extension of the hinged chain (10) by at least two reliefs (25) which are passed through by the hinging pins (40) for hinging with respective pairs of external plates (30) and
the engaging zones (25, 26) are situated between the hinging pins (40).

2. Hinged chain (10) according to Claim 1, wherein the reliefs (25) of each chain element (20) are connected together by means of at least one reinforcing rib (27) close to one of the longitudinal side surfaces (22, 23) of the chain element (20).

3. Hinged chain (10) according to Claim 2, wherein said at least one reinforcing rib (27) has a free edge (37) with a height the same as or smaller than the height of the external plates (30), said heights being both calculated with respect to a side surface (29) of the chain element (20) opposite to the side surface (24).

4. Hinged chain (10) according to Claim 1, wherein said reliefs (25) are in pairs and are symmetrical with respect to a plane (k) transverse to the chain element (20) in the direction of extension of the hinged chain (10) and approximately in the centre of the chain element (20).

5. Hinged chain (10) according to Claim 1, wherein the sides of the reliefs (25) in the direction of extension of the hinged chain (10) have the configuration of an internal-tooth gearing; said sides being suitable for coming into contact with the teeth (112) of a gear wheel (110).

6. Hinged chain (10) according to Claim 1, wherein the chain elements (20) are sintered metal-powder elements.

7. Hinged chain (10) according to Claim 1, wherein the chain elements (20) are pressure-cast in light alloys or cold-pressed using steel or injection-moulded using polymer materials.

8. Hinged chain (10) according to Claim 1, wherein the hinging pins (40) are inserted inside through-holes (28) provided in the reliefs (25) of the chain elements (20) and inside corresponding through-holes (38) provided in the external plates (30).

9. Chain actuator (80) for moving fixtures or windows, comprising:
- a hinged chain (10) according to claim 1; and
- actuating means (100) which engage in sequence inside the engaging zones (25, 26) of the chain elements (20) for driving the hinged chain (10).

10. Chain actuator (80) according to Claim 9, wherein the actuating means (100) comprise an actuating pinion (110), the teeth (112) of which are suitable for coming into contact with the sides of the reliefs (25) of the chain elements (20).

11. Chain actuator (80) according to Claim 9, wherein the reinforcing rib (27) of the chain elements (20) is adapted to come into contact with a side surface of the teeth (112) of the actuating pinion (110) so as to allow lateral centring of the hinged chain (10) on the actuating pinion (110).

## Patentansprüche

1. Gelenkkette (10), die zum Agieren als ein Drück/ Zugelement in einem Kettenaktuator geeignet ist, wobei die Kette folgendes aufweist:
eine Reihe von Kettenelementen (20), wobei jedes Kettenelement (20) einstückig geschaffen und dazu geeignet ist, an ein vorheriges Kettenelement und an ein nachfolgendes Kettenelement mittels eines entsprechenden Paares externer Platten (30) angelenkt zu werden, die längsseitig und in einem engen Kontakt mit einem minimalen Spiel an Längsseitenflächen (22, 23) des Kettenelements (20) angeordnet sind,
wobei die externen Platten (30) und die Kettenelemente (20) durch eine Kopplungseinrichtung (40), die Gelenkstifte (40) aufweist, aneinander angelenkt sind, wobei
jedes Kettenelement (20) Endflächen (21) hat, die so ausgelegt sind, dass sie Endflächen eines vorherigen Kettenelementes und eines nachfolgenden Kettenelementes zugewandt sind, um zu ermöglichen, dass die Gelenkkette (10) in einer einzigen Richtung frei knickbar ist und zumindest eine Seitenfläche (24) hat, die sich quer zwischen den entsprechenden Paaren externer Platten (30) erstreckt und die so geformt ist, dass eine Reihe von Eingriffszonen (25, 26) zum Antreiben der Gelenkkette (10) definiert ist,
wobei die Eingriffszone (25, 26) des entsprechenden Kettenelements (20) in der Richtung einer Erstreckung der Gelenkkette (10) durch zumindest zwei Erhebungen (25) abgegrenzt ist, durch die die Gelenkstifte (40) hindurchtreten, um an die entsprechenden Paare externer Platten (30) angelenkt zu werden, und
die Eingriffszonen (25, 26) zwischen den Gelenkstiften (40) angeordnet sind.

2. Gelenkkette (10) gemäß Anspruch 1, wobei die Erhebungen (25) von jedem Kettenelement (20) nahe an einer der Längsseitenflächen (22, 23) des Kettenelements (20) miteinander verbunden sind.

3. Gelenkkette (10) gemäß Anspruch 2, wobei die zumindest eine Verstärkungsrippe (27) eine freie Kante (37) mit einer Höhe hat, die gleich oder kleiner ist als die Höhe der externen Platten (30), wobei die Höhen jeweils hinsichtlich einer Seitenfläche (29) des Kettenelements (20) gegenüber der Seitenfläche (24) berechnet sind.

4. Gelenkkette (10) gemäß Anspruch 1, wobei die Erhebungen (25) paarweise und symmetrisch hinsichtlich einer Ebene (k) quer zu dem Kettenelement (20) in der Richtung einer Erstreckung der Gelenkkette (10) und annähernd in der Mitte des Kettenelements (20) vorgesehen sind.

5. Gelenkkette (10) gemäß Anspruch 1, wobei die Seiten der Erhebungen (25) in der Richtung einer Erstreckung der Gelenkkette (10) die Konfiguration einer Innenverzahnung haben; wobei die Seiten dazu geeignet sind, mit den Zähnen (112) eines Zahnrads (110) in Kontakt zu gelangen.

6. Gelenkkette (10) gemäß Anspruch 1, wobei die Kettenelemente (20) gesinterte Metallpulverelemente sind.

7. Gelenkkette (10) gemäß Anspruch 1, wobei die Kettenelemente (20) druckgegossene Leichtmetalllegierungselemente oder kaltgepresste Elemente unter Verwendung von Stahl oder spritzgegossene Elemente unter Verwendung von Polymermaterialien sind.

8. Gelenkkette (10) gemäß Anspruch 1, wobei die Gelenkstifte (40) im Inneren von Durchgangslöchern (28), die in den Erhebungen (25) der Kettenelemente (20) vorgesehen sind, und im Inneren von entsprechenden Durchgangslöchern (38) eingesetzt sind, die in den externen Platten (30) vorgesehen sind.

9. Kettenaktuator (80) zum Bewegen einer Halterung oder von Fenstern, mit:
- einer Gelenkkette (10) gemäß Anspruch 1;
- einer Betätigungseinrichtung (100), die sequentiell im Inneren der Eingriffszonen (25, 26) der Kettenelemente (20) zum Antreiben der Gelenkkette (10) in Eingriff gelangt.

10. Kettenaktuator (80) gemäß Anspruch 9, wobei die Betätigungseinrichtung (100) ein Betätigungsritzel (110) aufweist, dessen Zähne (112) dazu geeignet sind, mit den Seiten der Erhebungen (25) der Kettenelemente (20) in Kontakt zu gelangen.

11. Kettenaktuator (80) gemäß Anspruch 9, wobei die Verstärkungsrippe (27) der Kettenelemente (20) daran angepasst ist, mit einer Seitenfläche der Zähne (112) des Betätigungsritzels (110) in Kontakt zu gelangen, um eine seitliche Zentrierung der Gelenkkette (10) an dem Betätigungsritzel (110) zu ermöglichen.

## Revendications

1. Chaîne articulée (10) appropriée pour servir d'élément de poussée/traction dans un actionneur de chaîne, ladite chaîne comprenant :
une série d'éléments de chaîne (20), chaque élément de chaîne (20) étant réalisé d'un seul tenant et étant approprié pour être articulé avec un élément de chaîne précédent et un élément de chaîne suivant au moyen de paires respectives de plaques externes (30) agencées le long de et en contact immédiat avec un jeu minimum contre les surfaces latérales longitudinales (20, 23) de l'élément de chaîne (20),
lesdites plaques externes (30) et lesdits élément de chaîne (20) étant articulés ensemble par des moyens de couplage (40) comprenant des broches d'articulation (40),
dans laquelle :
chaque élément de chaîne (20) a des surfaces d'extrémité (21) conçues pour faire face aux surfaces d'extrémité d'un élément de chaîne précédent et d'un élément de chaîne suivant afin de permettre à la chaîne articulée (10) d'être pliée librement dans une seule direction et a au moins une surface latérale (24) qui s'étend transversalement entre les paires respectives de plaques externes (30) et qui est formée afin de définir une série de zones de mise en prise (25, 26) pour entraîner la chaîne articulée (10),
les zones de mise en prise (25, 26) de chaque élément de chaîne (20) étant délimitées dans la région d'extension de la chaîne articulée (10) par au moins deux reliefs (25) qui sont traversés par les broches d'articulation (40) pour s'articuler avec les paires respectives de plaques externes (30), et
les zones de mise en prise (25, 26) sont situées entre les broches d'articulation (40).

2. Chaîne articulée (10) selon la revendication 1, dans laquelle les reliefs (25) de chaque élément de chaîne (20) sont raccordés ensemble au moyen d'au moins une nervure de renforcement (27) à proximité de l'une des surfaces latérales longitudinales (22, 23) de l'élément de chaîne (20).

3. Chaîne articulée (10) selon la revendication 2, dans laquelle ladite au moins une nervure de renforcement (27) a un bord libre (37) avec une hauteur égale ou inférieure à la hauteur des plaques externes (30), lesdites hauteurs étant toutes deux calculées par rapport à une surface latérale (29) de l'élément de chaîne (20) opposée à la surface latérale (24).

4. Chaîne articulée (10) selon la revendication 1, dans laquelle lesdits reliefs (25) sont en paires et sont symétriques par rapport à un plan (k) transversal par rapport à l'élément de chaîne (20) dans la direction d'extension de la chaîne articulée (10) et approximativement dans le centre de l'élément de chaîne (20).

5. Chaîne articulée (10) selon la revendication 1, dans laquelle les côtés des reliefs (25) dans la direction d'extension de la chaîne articulée (10) ont la configuration d'un engrenage à dents internes ; lesdits côtés étant appropriés pour venir en contact avec les dents (112) d'une roue dentée (110).

6. Chaîne articulée (10) selon la revendication 1, dans laquelle les éléments de chaîne (20) sont des éléments frittés en poudre métallique.

7. Chaîne articulée (10) selon la revendication 1, dans laquelle les éléments de chaîne (20) sont moulés sous pression dans des alliages légers ou pressés à froid en utilisant de l'acier ou moulés par injection en utilisant des matériaux polymères.

8. Chaîne articulée (10) selon la revendication 1, dans laquelle les broches d'articulation (40) sont insérées à l'intérieur de trous débouchants (28) prévus dans les reliefs (25) des éléments de chaîne (20) et à l'intérieur de trous débouchants (38) correspondants prévus dans les plaques externes (30).

9. Actionneur de chaîne (80) pour déplacer des installations ou des fenêtres, comprenant :
une chaîne articulée (10) selon la revendication 1 ; et
des moyens d'actionnement (100) qui se mettent en prise en séquence à l'intérieur des zones de mise en prise (25, 26) des éléments de chaîne (20) pour entraîner la chaîne articulée (10).

10. Actionneur de chaîne (80) selon la revendication 9, dans lequel les moyens d'actionnement (100) comprennent un pignon d'actionnement (110) dont les dents (112) sont appropriées pour venir en contact avec les côtés des reliefs (25) des éléments de chaîne (20).

11. Actionneur de chaîne (80) selon la revendication 9, dans lequel la nervure de renforcement (27) des éléments de chaîne (20) est adaptée pour venir en contact avec une surface latérale des dents (112) du pignon d'actionnement (110) afin de permettre le centrage latéral de la chaîne articulée (10) sur le pignon d'actionnement (110).
